Europäisches Patentamt

**European Patent Office**

**Office européen des brevets**

(11) Publication number: **0 391 705**
**A2**

# EUROPEAN PATENT APPLICATION

(21) Application number: **90303643.2**

(22) Date of filing: **04.04.90**

(51) Int. Cl.5: **F03D 7/02**

(30) Priority: **04.04.89 GB 8907546**

(43) Date of publication of application:
**10.10.90 Bulletin 90/41**

(84) Designated Contracting States:
**CH DE DK FR GB LI NL SE**

(71) Applicant: **Kidd, Archibald Watson**
**Seend Close Seend**
**Melksham Wiltshire(GB)**

(72) Inventor: **Kidd, Archibald Watson**
**Seend Close Seend**
**Melksham Wiltshire(GB)**

(74) Representative: **Ford, Michael Frederick et al**
**MEWBURN ELLIS 2 Cursitor Street**
**London EC4A 1BQ(GB)**

(54) **Anti-stalling means on a windmill tail.**

(57) In order to rescue a windmill from a stall in reverse wind conditions, a vane (5) which normally trails downwind has its end portion (6) hinged about an upright axis (7).

Reverse wind pushes this (6) out of the plane of the vane (5), creating misalignment with the reverse wind thereby starting movement of the vane (5) and enabling the wind to act on the vane to turn the windmill to face into the wind.

EP 0 391 705 A2

## ANTI-STALLING MEANS ON A WINDMILL TAIL

This invention relates to windmills, which preferably, but not necessarily exclusively, are used for generation of electricity.

While most power windmills at the present time use sophisticated means of keeping the blade-rotor system facing the wind, it is possible in future that a large vane or tail will be used instead, thus eliminating more or less complicated gear and also possibly the need for a power supply to be available at all times.

Providing a tail is large enough, and is supported on a suitable down-wind beam member or structure, there seems little need to use expensive tackle. Furthermore, the overhung weight of the tail and cantilever structure supporting it can be beneficial to some extent in counteracting the bending moment on the top of the windmill tower's rotatable platform. This may carry a gearbox and electrical generator as well as a front-overhung main windmill rotor system.

However there is a problem, which however unlikely, may arise once in a very long while, possibly many years. Suppose the wind dies away to dead calm and subsequently begins to blow again but from a direction of 180° away from the former direction. In this situation the wind would engage on the back of the whole of the blade system on the main rotor, but only on the very end profile of the tail, necessarily virtually a vertical line in area, and the result would be that the windmill would be completely taken aback and in fact stalled. Furthermore the drag of the wind on the back of the blades would ensure that the stall would not easily cure itself since the tail would be virtually helpless.

To deal with this problem without recourse to an outside power supply, I propose that in a windmill having a rotor and a wind vane or tail to project down wind from the rotor, a portion of the vane or tail should be hinged to the remainder of the tail so as to be free to deflect. This portion may be an end portion of the tail, possibly a fairly small part of it. If the rotor should become stalled with a reverse wind direction, the hinged part of the tail would be able to flap to one side or the other of the line of direction of the reverse wind.

It may well be that some degree of damping may be an advantage to prevent the hinged part of the tail going over to one side or the other too violently, but basically the hinged part will be free to respond to variation of the reverse directional wind. Cushioned stops are preferably provided to prevent the hinged tail section swivelling to too great an angle and it is thought that 30° or so will be adequate.

Once the hinged part of the wind tail vane has started to deflect, the force on it will gain strength due to its increasing angle to the wind. When it has travelled around its pivot axis (which is preferably vertical) for say 30° it will be powerful enough to pull the main tail structure out of its stalled position and the wind will then have sufficient incidence on the tail system to turn the windmill to face the new wind direction.

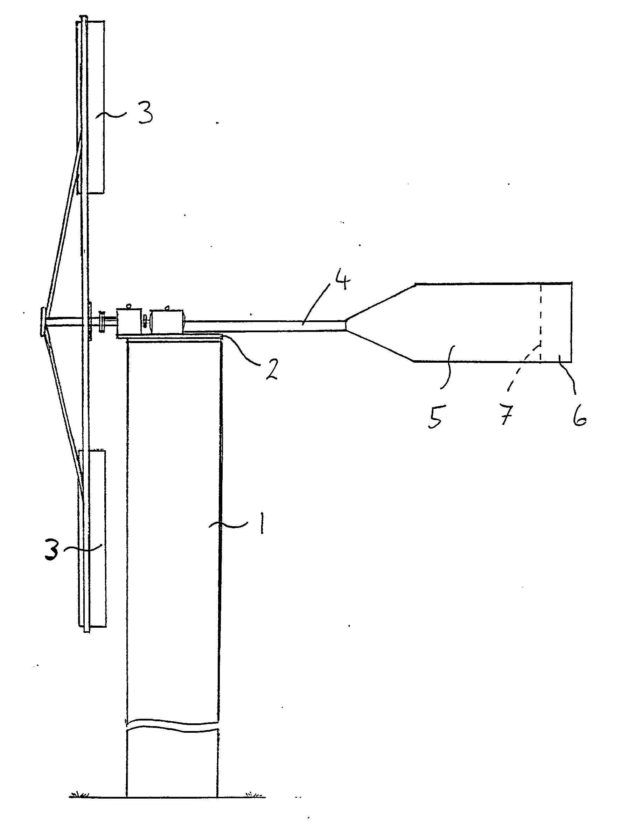

An embodiment is shown in the sole drawing. The windmill has a fixed tower (1) summounted by a rotary table (2). In front of the tower is an assembly of blades (3) and supporting structure able to rotate around a horizontal axis. Projecting in the opposite direction is an arm (4) terminating in a vane (5) which is generally planar. The end portion (6) is hinged to the rest of the vane so as to be able to pivot around a vertical axis (7).

This invention may be applied to windmills as described in my simultaneous European applications entitled "The Design of a Windmill Blade and "Automatic Feathering Gear for Windmill Blades the disclosures of which are incorporated herein by reference

## Claims

1. A windmill having a rotor and a wind vane to project from the rotor, characterised in that a portion of the vane is pivotally attached to the remainder of the vane so as to be free to deflect.

2. A windmill windmill according to claim 1 wherein the said portion is an end portion of the vane.

3. A windmill according to claim 1 or claim 2 which includes an electrical generator to generate electricity as the wind rotates a blade assembly of the windmill.